# EUROPEAN PATENT SPECIFICATION

(11) **EP 4 502 553 B1**
(45) Date of publication and mention of the grant of the patent: **29.07.2026**
(21) Application number: 23774297.8
(22) Date of filing: 13.02.2023
(51) Int. Cl.: G01V 1/01, G01F 1/667, G01F 15/063, H04Q 9/00, G08B 21/10

(54) **EARTHQUAKE SECURITY SYSTEM**
ERDBEBENSICHERHEITSSYSTEM
SYSTÈME DE SÉCURITÉ SISMIQUE

(30) Priority: 24.03.2022 JP 2022047751
(43) Date of publication of application: 05.02.2025
(73) Proprietor: Panasonic Intellectual Property Management Co., Ltd., Kadoma-shi, Osaka 571-0057 (JP)
(72) Inventor: UCHIMURA, Kazuya, Osaka 571-0057 (JP); YOKOHATA, Mitsuo, Osaka 571-0057 (JP)
(74) Representative: SSM Sandmair
(86) International application number: PCT/JP2023/004718
(87) International publication number: WO 2023/181698

(56) References cited:
- JP-A- 2018 204 947
- JP-A- 2019 219 174
- JP-A- 2020 008 487
- JP-A- 2020 008 487
- US-A1- 2021 054 997

## Description

### Technical Field

The present invention relates to an earthquake security system.

### Background Art

Conventionally known is a gas meter which is located at each consumer's place and includes a seismoscope (PTL 1). In a gas security system of PTL 1, when acceleration detected at the time of the occurrence of an earthquake is a predetermined level or more, the seismoscope transmits a signal to a monitoring center. The monitoring center receives the signals from the seismoscopes of the consumer's places and outputs a gas supply stop signal based on a cumulative number of the consumer's places each of whose signal is the predetermined level or more.
JP 2020 008487 A provides a gas meter that is advantageous for quickly grasping damage caused by an earthquake when an earthquake occurs in an area where the gas meter is installed.

### Citation List

### Patent Literature

PTL 1: Japanese Laid-Open Patent Application Publication No. 2003-141660

### Summary of Invention

### Technical Problem

However, the seismoscope transmits the signal when the acceleration is the above predetermined level, and for example, the seismic intensity is 5 or more. Therefore, the monitoring center can only determine for each consumer's place whether or not the earthquake having the seismic intensity of 5 has occurred. As a result, it is difficult for the monitoring center to estimate the damages of the respective consumer's places, and therefore, it is difficult to determine the priority rankings of recovery work.

An object of the present invention is to provide an earthquake security system which can easily estimate the damages of respective consumer's places by an earthquake and easily determine the priority rankings of recovery work.

### Solution to Problem

An earthquake security system of the present invention includes: gas meters located at respective consumer's places, each of the gas meters including a measurer that is configured to measure gas flowing to a gas appliance, an acceleration sensor that is configured to detect acceleration, a main body that is configured to accommodate the measurer and the acceleration sensor, a calculator that is configured to calculate an earthquake index value and an inclination of the main body based on a detection result of the acceleration sensor, the earthquake index value indicating the scale of an earthquake, the inclination being based on an initial position of the main body, and a communicator that is configured to communicate with an outside; and a center server that is configured to receive the earthquake index values and the inclinations through the communicators.

According to the present invention, the earthquake index value and the inclination of the main body are calculated by the calculator. Based on the earthquake index value and the inclination of the main body which have been received from the gas meter, the center server can more accurately estimate the damage of each consumer's place by the earthquake. Thus, the center server can easily determine the priority ranking of the recovery work in accordance with the damage of each consumer's place. Therefore, the center server can inform a gas supplier of the gas meter which should be subjected to the recovery work immediately.

In the above invention, regardless of the earthquake index values, the center server is configured to set a priority ranking of recovery work of the gas meter having the inclination of a threshold or more to be higher than a priority ranking of recovery work of the gas meter having the inclination of less than the threshold.

According to the above configuration, when there exists the gas meter which has been significantly inclined by the earthquake, there is a possibility that the consumer's place at which such gas meter is located is significantly damaged. The recovery work of the gas meter at such consumer's place can be preferentially performed.

In the above invention, the center server may inform a gas supplier of the gas meter having the priority ranking of a predetermined value or more.

According to the above configuration, the gas supplier can recognize the gas meter which should be subjected to the recovery work immediately. Therefore, the gas supplier can immediately perform the recovery work of such gas meter.

### Advantageous Effects of Invention

The present invention can provide the earthquake security system which can easily estimate the damage of each consumer's place by the earthquake and can easily determine the priority ranking of the recovery work.

### Brief Description of Drawings

FIG. 1 is a block diagram showing an earthquake security system according to one embodiment of the present invention.
FIG. 2 is a block diagram showing components of a gas meter in the earthquake security system of FIG. 1.
FIG. 3 is a diagram for explaining an inclination of a main body of the gas meter.
FIG. 4 is a diagram showing a priority ranking determination logic used when determining the priority rankings of recovery work of the gas meters.

### Description of Embodiments

Hereinafter, an earthquake security system according to an embodiment of the present invention will be described with reference to the drawings. The earthquake security system described below is merely one embodiment of the present invention. Therefore, the present invention is not limited to the following embodiment, and modifications and alterations could be made hereto without departing from the scope of the invention, as defined by the appended claims.

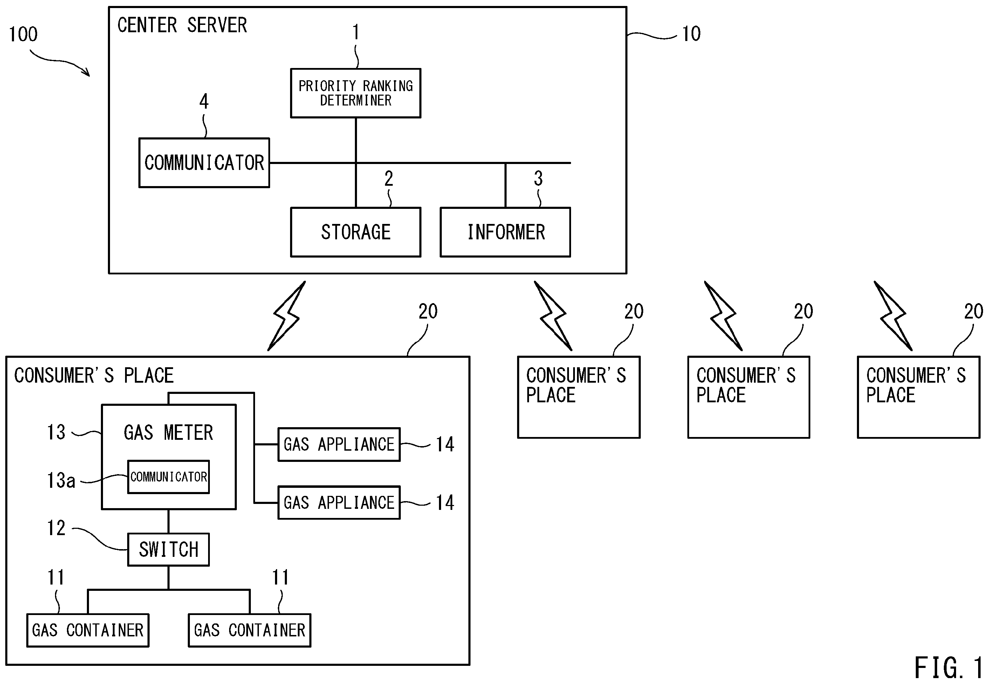

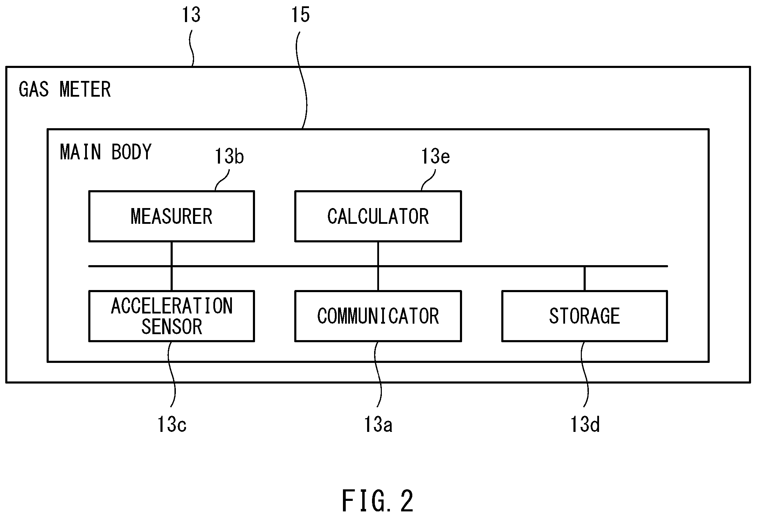

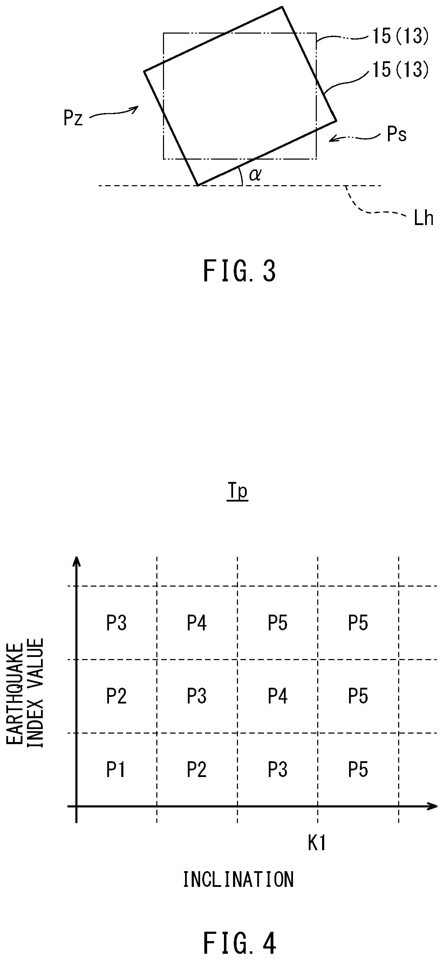

FIG. 1 is a block diagram showing an earthquake security system 100 according to one embodiment of the present invention. FIG. 2 is a block diagram showing components of a gas meter 13 in the earthquake security system 100 of FIG. 1. FIG. 3 is a diagram for explaining an inclination of a main body 15 of the gas meter 13.

As shown in FIG. 1, the earthquake security system 100 includes a center server 10 and consumer's places 20. FIG. 1 shows four consumer's places 20. However, in the earthquake security system 100, the number of consumer's places 20 may be plural, may be three or less, or may be five or more.

As one example, each of the consumer's places 20 includes two gas containers 11, a switch 12, the gas meter 13, and two gas appliances 14. Moreover, examples of the consumer's place 20 include a hospital, a school, a municipality facility, a nursing facility, an ordinary home, and a commercial facility. However, the consumer's place is not limited to these and may be a building that may use gas.

The gas container 11 is also called a gas bomb and is filled with gas, such as LP gas (liquefied petroleum gas). In the following description, the LP gas is simply referred to as gas. Herein, the gas is supplied from the gas container 11 to the gas appliance 14. However, the gas may be supplied to each consumer's place 20 through a conduit embedded underground. The switch 12 switches a gas supply passage such that the gas in one of the two gas containers 11 is supplied to the consumer's place 20. Thus, even when the gas in one of the two gas containers 11 runs out, the gas in the other gas container 11 may be supplied to the gas appliance 14.

The gas meter 13 measures the flow rate of the gas to be supplied to the gas appliance 14. The gas meter 13 may include, for example, a shutoff valve that shuts off the gas supply passage when an abnormality is detected.

The gas meter 13 includes a communicator 13a. The communicator 13a has a function of performing wireless communication with the center server 10. As a wireless communication system between the communicator 13a and the center server 10, a communication network, such as the Internet, a LAN, or a LPWA (Low Power Wide Area), can be used. The communicator 13a periodically transmits information regarding the amount of gas used in the consumer's place 20 to the center server 10 together with information regarding a date on which the gas is used, an ID that specifies the consumer's place 20, and location area information of the consumer's place 20. The communicator 13a may not be included in the gas meter 13 and may be an external slave device and communicate with the gas meter 13.

For example, each of the gas appliances 14 is a gas stove, a gas-powered water heater, a gas-powered fan heater, or the like. However, the gas appliance 14 is not limited to these and may be an appliance that consumes gas.

The center server 10 includes a priority ranking determiner 1, a storage 2, an informer 3, and a communicator 4. Each of the priority ranking determiner 1 and the informer 3 among the above components of the center server 10 is functionally realized by: a microcontroller including a CPU (Central Processing Unit) and a memory (a ROM (Read Only Memory) and a RAM (Random Access Memory)) storing a program; an ASIC (Application Specific Integrated Circuit); or the like. As the storage 2, various memories, a hard disk, and the like may be used.

The priority ranking determiner 1 receives below-described earthquake index values and information regarding the inclinations of the main bodies 15 of the gas meters 13 from the gas meters 13 through the communicator 4. Processing by the priority ranking determiner 1 will be described later in detail.

The storage 2 stores a priority ranking table Tp (FIG. 4) used when the priority ranking determiner 1 determines the priority rankings of the recovery work of the gas meters 13 based on the earthquake index values and the inclinations. The priority ranking table Tp will be described later.

The informer 3 informs a gas supplier of the gas meter 13 whose priority ranking determined by the priority ranking determiner 1 is a predetermined value or more. Thus, the gas supplier can recognize the gas meter 13 whose priority ranking of the recovery work is high.

As shown in FIG. 2, in addition to the communicator 13a, the gas meter 13 includes a measurer 13b, an acceleration sensor 13c, a storage 13d storing various data, a calculator 13e, and the main body 15 that is a casing. In addition to the main body 15, the gas meter 13 includes a pipeline through which the gas measured by the measurer 13b flows, the shutoff valve, and the like.

The measurer 13b measures the amount of gas used in the consumer's place 20. Specifically, the measurer 13b measures the flow rate of the gas supplied from the gas container 11 to the gas appliance 14 in the consumer's place 20. As one example, the measurer 13b may be an ultrasonic flow meter that measures the flow rate from a propagation velocity of ultrasound in the pipeline through which the gas flows.

The acceleration sensor 13c is, for example, a known sensor using a piezoelectric element. The acceleration sensor 13c is located in the main body 15. Specifically, for example, the acceleration sensor 13c can be located on a control board that is a printed wiring board located in the main body 15. For example, when vibrations, such as an earthquake, occur, the acceleration sensor 13c detects acceleration of acceleration axes that are three axes orthogonal to each other.

The calculator 13e calculates the earthquake index value based on the acceleration detected by the acceleration sensor 13c. As the earthquake index value, the calculator 13e can calculate various values by which the scales of earthquakes can be compared with each other, such as a SI (Spectral Intensity) value, seismic intensity, magnitude, amplitude, and displacement, which are generally used as numerical values indicating the degree of damage of a building.

As shown in FIG. 3, when locating the gas meter 13, the acceleration sensor 13c is located such that the gas meter 13 takes an initial posture Ps. The acceleration sensor 13c is located such that when the gas meter 13 is in the initial posture Ps, one of the three axes extends along a gravitational acceleration direction. When vibrations, such as an earthquake, occur, the posture of the gas meter 13 which is in the initial posture Ps may change. In FIG. 3, the posture of the gas meter 13 whose posture has been changed by the vibrations is shown as an inclined posture Pz.

For example, when the gas meter 13 receives the vibrations, the gas meter 13 is inclined at an inclination (inclination angle) α to a horizontal plane Lh. Accordingly, the acceleration sensor 13c included in the gas meter 13 is also inclined at the inclination α. At this time, since the direction of the acceleration axis corresponding to the gravitational acceleration direction changes, the detected acceleration of the acceleration axis corresponding to the gravitational acceleration direction of the acceleration sensor 13c changes in accordance with the inclination of the acceleration sensor 13c. The calculator 13e calculates the inclination α of the acceleration sensor 13c in accordance with a difference between the acceleration detected by the acceleration sensor 13c when the gas meter 13 is in the initial posture Ps and the acceleration detected by the acceleration sensor 13c when the gas meter 13 is in the inclined posture Pz. FIG. 3 two-dimensionally shows the inclination of the gas meter 13. However, the gas meter 13 may be inclined three-dimensionally.

FIG. 4 is a diagram showing a priority ranking determination logic Tp used when determining the priority rankings of the recovery work of the gas meters 13.

Based on the above earthquake index values and the above inclinations which have been calculated by the calculators 13e of the gas meters 13, the priority ranking determiner 1 of the center server 10 determines the priority rankings of the recovery work of the gas meters 13 by using the priority ranking determination logic Tp. Details will be described below.

The priority rankings of the recovery work of the gas meters 13 which correspond to the inclinations of the gas meters 13 and the earthquake index values are determined in the priority ranking determination logic Tp of FIG. 4. Specifically, in the priority ranking determination logic Tp, the priority ranking of the recovery work is set higher as the earthquake index value and the inclination increase. Regions P1, P2, P3, P4, and P5 that define the priority rankings are set in the priority ranking determination logic Tp. Each region includes a range of the earthquake index value and a range of the inclination. The priority ranking of the recovery work of the region P2 is higher than that of the region P1, and the priority ranking of the recovery work of the region P3 is higher than that of the region P2. Similarly, the priority ranking of the recovery work of the region P4 is higher than that of the region P3, and the priority ranking of the recovery work of the region P5 is higher than that of the region P4. The priority ranking of the region P5 is the highest ranking.

The priority ranking determiner 1 determines the priority ranking of the recovery work of each gas meter 13 by determining from the regions P1, P2, P3, P4, and P5 in the priority ranking table Tp, the region to which the earthquake index value and the inclination which have been calculated by the calculator 13e correspond.

A threshold K1 is set as the inclination in the priority ranking determination logic Tp. For example, one threshold K1 is set in a range of 30° to 45°. Regions where the inclination is the threshold K1 or more are uniformly set as, for example, the region P5. To be specific, when the inclination becomes the threshold K1 or more, the recovery work needs to be performed immediately, and therefore, the priority ranking of the recovery work is set to the highest ranking regardless of the earthquake index value. When the inclination calculated by the calculator 13e is the threshold K1 or more, the priority ranking determiner 1 can set the priority ranking of the recovery work of the gas meter 13 to the highest ranking regardless of the earthquake index value.

Regardless of the earthquake index values, the priority ranking determiner 1 sets the priority ranking of the recovery work of the gas meter 13 having the inclination of the threshold K1 or more to be higher than the priority ranking of the recovery work of the gas meter 13 having the inclination of less than the threshold K1. Moreover, the priority ranking determiner 1 may inform the gas supplier of the gas meter 13 having the priority ranking of the threshold K1 or more.

As described above, according to the earthquake security system 100 of the present embodiment, the earthquake index value and the inclination of the main body 15 of the gas meter 13 are calculated by the calculator 13e. Based on the earthquake index value and the inclination of the main body 15 which have been received from the gas meter 13, the center server 10 can estimate the damage of each consumer's place 20 by the earthquake. Thus, the center server 10 can easily determine the priority ranking of the recovery work in accordance with the damage of each consumer's place 20.

In the invention, regardless of the earthquake index values, the priority ranking determiner 1 sets the priority ranking of the recovery work of the gas meter 13 having the inclination of the threshold K1 or more to be higher than the priority ranking of the recovery work of the gas meter 13 having the inclination of less than the threshold K1. In addition, the priority rankings of the recovery work of the gas meters 13 each having the inclination of the threshold K1 or more are further determined based on the earthquake index values.

Moreover, in the above embodiment, the gas meter 13 transmits the information regarding the flow rate of the gas used by the gas appliance 14 of the consumer's place 20, to the center server 10 through wireless communication. However, the above embodiment is not limited to this. The gas meter 13 may transmit the information regarding the flow rate of the gas to the center server 10 through wired communication.

Moreover, in the above embodiment, two gas containers 11 and two gas appliances 14 are described. However, the above embodiment is not limited to this. The number of gas containers 11 may be one or may be three or more, and the number of gas appliances 14 may be one or may be three or more.

Moreover, in the above embodiment, the gas container 11 is filled with the LP gas (liquefied petroleum gas) that is one example of the gas. However, the above embodiment is not limited to this. The gas container 11 may be filled with another gas, such as oxygen.

### Reference Signs List

- 1: priority ranking determiner
- 2: storage
- 3: informer
- 10: center server
- 11: gas container
- 13: gas meter
- 13a: communicator
- 13b: measurer
- 13c: acceleration sensor
- 13d: storage
- 13e: calculator
- 14: gas appliance
- 15: main body
- 20: consumer's place
- 100: earthquake security system

## Claims

1. An earthquake security system (100) comprising:
gas meters (13) located at respective consumer's places (20), each of the gas meters (13) including
a measurer (13b) that is configured to measure gas flowing to a gas appliance (14),
an acceleration sensor (13c) that is configured to detect acceleration,
a main body (15) that is configured to accommodate the measurer (13b) and the acceleration sensor (13c),
a calculator (13e) that is configured to calculate an earthquake index value and an inclination of the main body (15) based on a detection result of the acceleration sensor (13c), the earthquake index value indicating the scale of an earthquake, the inclination being based on an initial position of the main body (15), and
a communicator (13a) that is configured to communicate with an outside; and
a center server (10) that is configured to receive the earthquake index values and the inclinations through the communicators (13a), wherein
regardless of the earthquake index values, the center server (10) is configured to set a priority ranking of recovery work of the gas meter (13) having the inclination of a threshold (K1) or more to be higher than a priority ranking of recovery work of the gas meter (13) having the inclination of less than the threshold (K1), **characterized in that** the priority rankings of the recovery work of the gas meters (13) each having the inclination of the threshold (K1) or more are further determined based on the earthquake index values.

2. The earthquake security system (100) according to claim 1, wherein the center server (10) is configured to inform a gas supplier of the gas meter (13) having the priority ranking of a predetermined value or more.

## Patentansprüche

1. Erdbebensicherheitssystem (100), enthaltend:
Gaszähler (13), die sich jeweils an Verbraucherstandorten (20) befinden, wobei jeder der Gaszähler (13) Folgendes umfasst:
eine Messeinrichtung (13b), die dazu eingerichtet ist, zu einer Gasvorrichtung (14) strömendes Gas zu messen,
einen Beschleunigungssensor (13c), der dazu eingerichtet ist, eine Beschleunigung zu detektieren,
einen Hauptkörper (15), der dazu eingerichtet ist, die Messeinrichtung (13b) und den Beschleunigungssensor (13c) aufzunehmen,
einen Rechner (13e), der dazu eingerichtet ist, auf Grundlage eines Detektionsergebnisses des Beschleunigungssensors (13c) einen Erdbebenindexwert und eine Neigung des Hauptkörpers (15) zu berechnen, wobei der Erdbebenindexwert das Ausmaß eines Erdbebens angibt und die Neigung auf einer Anfangsposition des Hauptkörpers (15) basiert, und
einen Kommunikator (13a), der dazu eingerichtet ist, nach außen zu kommunizieren; und
einen Zentralserver (10), der dazu eingerichtet ist, die Erdbebenindexwerte und die Neigungen über die Kommunikatoren (13a) zu empfangen,
wobei unabhängig von den Erdbebenindexwerten der Zentralserver (10) dazu eingerichtet ist, eine Prioritätsrangfolge von Wiederherstellungsarbeiten des Gaszählers (13) mit einer Neigung von einem Schwellenwert (K1) oder mehr höher festzulegen als eine Prioritätsrangfolge von Wiederherstellungsarbeiten des Gaszählers (13) mit einer Neigung von weniger als dem Schwellenwert (K1), **dadurch gekennzeichnet, dass** die Prioritätsrangfolgen der Wiederherstellungsarbeiten der Gaszähler (13), die jeweils eine Neigung von dem Schwellenwert (K1) oder mehr aufweisen, ferner auf Grundlage der Erdbebenindexwerte bestimmt werden.

2. Erdbebensicherheitssystem (100) nach Anspruch 1,
wobei der Zentralserver (10) dazu eingerichtet ist, einen Gasversorger über den Gaszähler (13) mit der Prioritätsrangfolge von einem vorbestimmten Wert oder mehr zu informieren.

## Revendications

1. Système de sécurité sismique (100) comprenant :
des compteurs de gaz (13) situés chez des consommateurs (20) respectifs, chacun des compteurs de gaz (13) comprenant
un organe de mesure (13b) conçu pour mesurer un débit de gaz vers un appareil à gaz (14),
un capteur d'accélération (13c) conçu pour détecter une accélération,
un corps principal (15) conçu pour loger l'organe de mesure (13b) et le capteur d'accélération (13c),
un organe de calcul (13e) conçu pour calculer une valeur d'indice sismique et une inclinaison du corps principal (15) en fonction du résultat de détection du capteur d'accélération (13c), la valeur d'indice sismique indiquant l'ampleur d'un séisme, l'inclinaison étant fonction de la position initiale du corps principal (15), et
un organe de communication (13a) conçu pour communiquer avec l'extérieur ; et
un serveur central (10) conçu pour recevoir les valeurs d'indice sismique et les inclinaisons par l'intermédiaire des organes de communication (13a), sachant que
indépendamment des valeurs d'indice sismique, le serveur central (10) est conçu pour définir un classement par priorité des travaux de remise en état d'un compteur de gaz (13) présentant une inclinaison supérieure ou égale à un seuil (K1) comme étant plus élevé que le classement par priorité des travaux de remise en état d'un compteur de gaz (13) présentant une inclinaison inférieure au seuil (K1) ;
**caractérisé en ce que** les classements par priorité des travaux de remise en état des compteurs de gaz (13) présentant chacun une inclinaison supérieure ou égale au seuil (K1) sont en outre déterminés en fonction des valeurs d'indice sismique.

2. Système de sécurité sismique (100) selon la revendication 1, dans lequel le serveur central (10) est conçu pour informer un fournisseur de gaz du compteur de gaz (13) présentant le classement par priorité d'au moins une valeur prédéterminée.
